# EUROPÄISCHE PATENTSCHRIFT

(11) **EP 3 114 771 B1**
(45) Veröffentlichungstag und Bekanntmachung des Hinweises auf die Patenterteilung: **18.08.2021**
(21) Anmeldenummer: 14814799.4
(22) Anmeldetag: 09.12.2014
(51) Int. Cl.: H04B 3/54, H04L 12/40, H04B 3/56, H04L 25/02

(54) **VORRICHTUNG ZUR SIGNALÜBERTRAGUNG**
DEVICE FOR THE TRANSMISSION OF SIGNALS
DISPOSITIF POUR LA TRANSMISSION DE SIGNAUX

(30) Priorität: 06.03.2014 DE 102014204155
(43) Veröffentlichungstag der Anmeldung: 11.01.2017
(73) Patentinhaber: Dr. Johannes Heidenhain GmbH, 83301 Traunreut (DE)
(72) Erfinder: SCHENZINGER, Daniel, 83349 Palling-Freutsmoos (DE)
(86) Internationale Anmeldenummer: PCT/EP2014/077017
(87) Internationale Veröffentlichungsnummer: WO 2015/131967

(56) Entgegenhaltungen:
- EP-A1- 2 642 629
- EP-A1- 2 651 043
- GB-A- 2 485 781

## Beschreibung

### GEBIET DER TECHNIK

Die Erfindung betrifft eine Vorrichtung zur Übertragung von Stromversorgungssignalen und Datensignalen zwischen einem Positionsmessgerät und einer Folgeelektronik nach Anspruch 1. Eine erfindungsgemäße Vorrichtung erlaubt die Signalübertragung über lediglich ein Leitungspaar.

### STAND DER TECHNIK

Positionsmessgeräte sind in der Automatisierungstechnik weit verbreitet. Sie dienen zur Messung von Längen oder Winkeln, die von einer Folgeelektronik beispielsweise als Istwerte für Lageregelkreise benötigt werden, um Komponenten einer Maschine exakt positionieren zu können. Häufig kommen derartige Positionsmessgeräte in Werkzeugmaschinen zum Einsatz, bei denen Positionswerte unter anderem dazu benötigt werden, die Werkzeugspindel exakt zu führen und so eine präzise, automatisierte Bearbeitung des Werkstückes zu ermöglichen. Die Folgeelektronik wird in diesem Fall als Numerische Steuerung (NC) bezeichnet.
Weiter sind Positionsmessgeräte bekannt, die zusätzlich zu oder anstelle von Positionswerten (Längen oder Winkeln) Geschwindigkeits- oder Beschleunigungswerte generieren. Das heißt, unter einem Positionsmessgerät wird vorliegend nicht nur eine Messeinrichtung verstanden, mit der Positionsmesswerte oder Änderungen von Positionsmesswerten an sich generiert werden, sondern es sollen hierunter auch Messeinrichtungen fallen, mit denen die Zeitabhängigkeit von Positionswerten, insbesondere in Form von Geschwindigkeits- oder Beschleunigungsmesswerten, erfasst wird.

Ferner kann es sich bei dem Positionsmessgerät um ein so genanntes Tastsystem handeln, das einen auslenkbaren Taststift aufweist, mit dem sich räumliche Grenzen eines Objektes, auch zeitabhängig, erfassen (ertasten) lassen.

Die Datenübertragung zwischen den Positionsmessgeräten und der Folgeelektronik erfolgt bevorzugt digital über serielle Schnittstellen. Die EP 0 660 209 A1 beschreibt beispielsweise ein Positionsmessgerät mit einer derartigen seriellen Schnittstelle. Für die Kommunikation zwischen dem Positionsmessgerät und der Folgeelektronik sind hier zwei Leitungspaare erforderlich, eines zur bidirektionalen Übertragung von Befehlen und Daten, ein weiteres zur Übermittlung eines Taktsignals zur Synchronisierung der Übertragung. Zur Signalübertragung kommen Leitungspaare zum Einsatz, weil die Signale zur Erreichung einer höheren Störsicherheit bevorzugt differentiell übertragen werden, beispielweise entsprechend dem in der Automatisierungstechnik weit verbreiteten RS-485-Standard. Da neben den zwei Leitungspaaren, die für die Kommunikation benötigt werden, auch noch wenigstens zwei Leitungen für die Stromversorgung des Positionsmessgeräts benötigt werden, sind für den Betrieb dieses Positionsmessgeräts an der Folgeelektronik also drei Leitungspaare erforderlich.

Da die elektrischen Leitungen, die hier zum Einsatz kommen, gerade bei Maschinen und Anlagen, in denen die Positionsmessgeräte und die Folgeelektronik räumlich weit voneinander getrennt angeordnet sind, einen erheblichen Kostenfaktor darstellen, besteht die Forderung, die Anzahl der für den Betrieb der Positionsmessgeräte an Folgeelektroniken benötigen Leitungen zu verringern. So stellt die DE 10 2008 027 902 A1 eine Schnittstelle vor, die kein separates Taktleitungspaar benötigt. Dadurch wird die Anzahl der benötigten Leitungen auf zwei Leitungspaare reduziert.

Darüber hinaus gibt es Bestrebungen, die Anzahl der Leitungen sogar auf nur ein Leitungspaar zu reduzieren. Hierzu ist es erforderlich, ein Mischsignal zu erzeugen, mit dem sowohl die Stromversorgungssignale, als auch die Datensignale übertragbar sind. Da für Positionsmessgeräte, die für den industriellen Einsatz tauglich sein sollen, bei kompakter Bauweise zulässige Gerätetemperaturen von 150°C und mehr gefordert werden, ist es aber häufig problematisch, die elektrischen Komponenten, die für die Erzeugung, bzw. Verarbeitung dieses Mischsignals erforderlich sind, in die Positionsmessgeräte zu integrieren.

Alternativ schlägt die EP 2 651 043 A1 vor, Stromversorgungssignale und Datensignale jeweils abwechselnd hintereinander über ein Leitungspaar zu übertragen. Dies hat aber zur Folge, dass in Zeiträumen, in denen Stromversorgungssignale übertragen werden, keine Datensignale übertragbar sind.

### ZUSAMMENFASSUNG DER ERFINDUNG

Es ist daher Aufgabe der Erfindung, eine Vorrichtung bereitzustellen, die unter Berücksichtigung der genannten Randbedingungen eine Signalübertragung über eine reduzierte Anzahl von Leitungen erlaubt.

Diese Aufgabe wird gelöst durch eine Vorrichtung zur Übertragung von Stromversorgungssignalen und Datensignalen gemäß den Ansprüchen 1 und 2. Vorteilhafte Ausführungsformen sind in den abhängigen Ansprüchen definiert.

Weitere Vorteile sowie Einzelheiten der vorliegenden Erfindung sind in den Zeichnungen dargestellt und werden in der nachfolgenden Beschreibung erläutert.

### KURZE BESCHREIBUNG DER ZEICHNUNGEN

Es zeigt
- Figur 1A: den prinzipiellen Aufbau einer ersten Ausführungsform einer erfindungsgemäßen Vorrichtung,
- Figur 1B: den prinzipiellen Aufbau einer weiteren Ausführungsform einer erfindungsgemäßen Vorrichtung,
- Figur 2A: den prinzipiellen Aufbau einer weiteren Ausführungsform einer erfindungsgemäßen Vorrichtung,
- Figur 2B: den prinzipiellen Aufbau einer weiteren Ausführungsform einer erfindungsgemäßen Vorrichtung,
- Figur 2C: den prinzipiellen Aufbau einer weiteren Ausführungsform einer erfindungsgemäßen Vorrichtung,
- Figur 3A: den prinzipiellen Aufbau einer weiteren Ausführungsform einer erfindungsgemäßen Vorrichtung,
- Figur 3B: den prinzipiellen Aufbau einer weiteren Ausführungsform einer erfindungsgemäßen Vorrichtung,
- Figur 4: ein Blockschaltbild einer erfindungsgemäßen Vorrichtung,
- Figur 5: ein Schaltbild einer bevorzugten Ausführungsform einer erfindungsgemäßen Vorrichtung.

### BESCHREIBUNG DER AUSFÜHRUNGSFORMEN

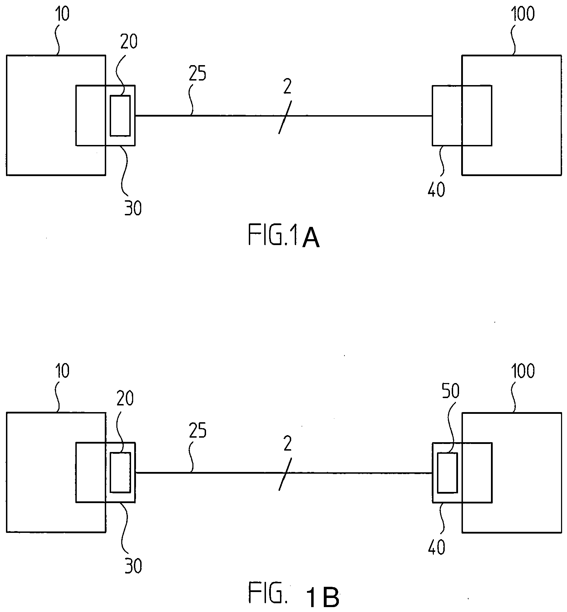

Figur 1A zeigt den prinzipiellen Aufbau einer ersten Ausführungsform einer erfindungsgemäßen Vorrichtung zur Übertragung von Stromversorgungssignalen und Datensignalen zwischen einem Positionsmessgerät 10 und einer Folgeelektronik 100, wobei die Folgeelektronik 100 ein beliebiges Steuergerät der Automatisierungstechnik, beispielsweise eine numerische Werkzeugmaschinensteuerung (NC), sein kann.

Da Positionsmessgeräte üblicherweise von der Folgeelektronik mit Strom versorgt werden, erfolgt die Übertragung der Stromversorgungssignale unidirektional von der Folgeelektronik 100 zum Positionsmessgerät 10. Datensignale werden dagegen bidirektional übertragen. So sendet die Folgeelektronik 100 beispielsweise Befehle und ggf. Daten (z.B. Konfigurationsdaten) zum Positionsmessgerät 10, während das Positionsmessgerät 10 empfangene Befehle ausführt und ggf. angeforderte Daten, insbesondere Messwerte (z.B. Positionswerte, Geschwindigkeitswerte, Beschleunigungswerte,...), zur Folgeelektronik 100 überträgt.

Das Positionsmessgerät 10 weist zwei Stromversorgungsanschlüsse und zwei Datenübertragungsanschlüsse zur bidirektionalen, differentiellen Datenübertragung, beispielsweise nach dem bekannten RS-485-Standard, auf. Eine derartige Schnittstelle ist beispielsweise aus der DE 10 2008 027 902 A1 bekannt und wird im Folgenden als Vierdraht-Schnittstelle bezeichnet. Die erfindungsgemäße Vorrichtung umfasst nun einen Vier-/Zweidraht-Wandler 20, der messgeräteseitig ebenfalls zwei Stromversorgungsanschlüsse und zwei Datenübertragungsanschlüsse aufweist, die mit den korrespondierenden Anschlüssen der Vierdraht-Schnittstelle des Positionsmessgeräts 10 verbindbar sind. Die Verbindung der Stromversorgungsanschlüsse und der Datenübertragungsanschlüsse erfolgt in diesem Ausführungsbeispiel über einen ersten Steckverbinder 30, der an einem entsprechenden Gegenstück am Positionsmessgerät 10 anschließbar ist. Hierbei ist der Vier-/Zweidraht-Wandler 20 im Gehäuse des ersten Steckverbinders 30 angeordnet.

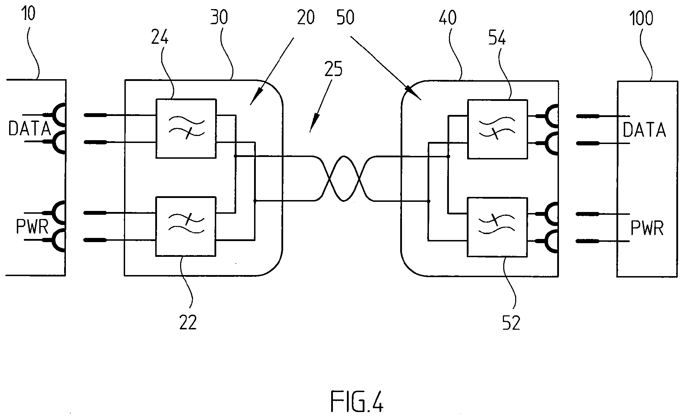

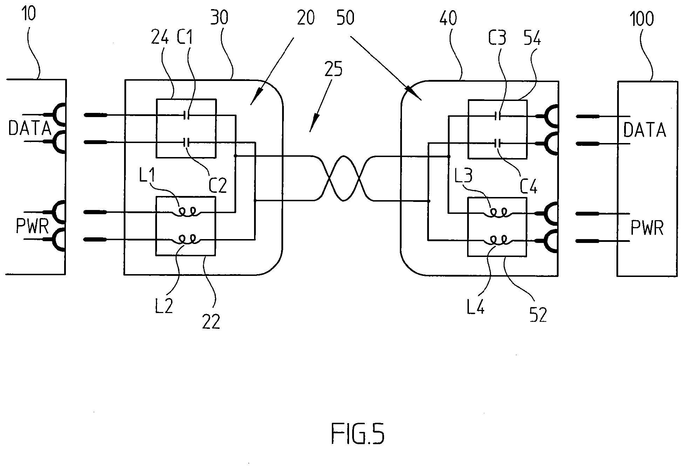

Der Vier-/Zweidraht-Wandler 20 ist geeignet ausgestaltet, um aus einem Mischsignal, das ihm von der Folgeelektronik 100 über ein einziges Leitungspaar 25 zugeführt wird, die Stromversorgungssignale, sowie diejenigen Datensignale, die von der Folgeelektronik 100 zum Positionsmessgerät 10 übertragen werden sollen, zu entnehmen und über die entsprechenden Anschlüsse dem Positionsmessgerät 10 zuzuführen. Weiter ist der Vier-/Zweidraht-Wandler 20 geeignet ausgestaltet, Datensignale, die vom Positionsmessgerät 10 zur Folgeelektronik 100 übertragen werden sollen, in das Mischsignal einzufügen. Das Mischsignal ist ein geeignetes Signal, mit dem Stromversorgungssignale und (bidirektionale) Datensignale über das Leitungspaar 25 übertragbar sind. Bei dem Mischsignal kann es sich beispielsweise um ein Stromversorgungssignal mit aufmoduliertem Datensignal handeln. In einer bevorzugten Ausführungsform kann das Einfügen und Entnehmen von Datensignalen, wie unten anhand der Figuren 4 und 5 gezeigt werden wird, einfach durch Ein- bzw. Auskoppeln mittels eines Hochpassfilters erfolgen, für die Trennung der Stromversorgungssignale von den Datensignalen kann dagegen ein Tiefpassfilter vorgesehen sein.
Alternativ kann das Mischsignal dadurch gebildet werden, dass Stromversorgungssignale und Datensignale in einem Zeitmultiplexverfahren über das Leitungspaar 25 übertragen werden.

Die zwei Adern des Leitungspaares 25 sind mit Vorteil miteinander verdrillt. Außerdem kann das Leitungspaar 25 von einem Schirm (z.B. Drahtgeflecht oder Metallfolie) umgeben sein, um Störungen des Mischsignals durch elektromagnetische Felder in der Umgebung des Leitungspaares 25 zu vermeiden. Zum Schutz vor mechanischen Beschädigungen sind das Leitungspaar 25 und der optionale Schirm mit Vorteil von einem Kunststoffmantel umgeben. Derartige Kabel, sowie deren Anschlusstechnik sind dem Fachmann an sich bekannt.

Seitens der Folgeelektronik 100 kann ein zweiter Steckverbinder 40 vorgesehen sein, der an ein entsprechendes Gegenstück an der Folgeelektronik 100 anschließbar ist. In diesem Ausführungsbeispiel weist die Folgeelektronik 100 eine Zweidrahtschnittstelle auf, an die das Leitungspaar 25, über das das Mischsignal übertragen wird, direkt anschließbar ist. Der zweite Steckverbinder 40 benötigt für die Verbindung somit lediglich ein Kontaktpaar.

Die Länge des Leitungspaars 25 stellt eine Hauptübertragungsstrecke dar, über die die Stromversorgungssignale und Datensignale als Mischsignal übertragen werden.

Figur 1B zeigt den prinzipiellen Aufbau einer weiteren Ausführungsform einer erfindungsgemäßen Vorrichtung zur Übertragung von Stromversorgungssignalen und Datensignalen zwischen einem Positionsmessgerät 10 und einer Folgeelektronik 100. Zusätzlich zu der anhand von Figur 1A beschriebenen Ausführungsform ist hier als Gegenstück zum Vier-/Zweidraht-Wandler auf der Seite der Folgeelektronik 100 ein Zwei-/Vierdraht-Wandler 50 angeordnet. Dieser weist zwei Stromversorgungsanschlüsse und zwei Datenübertragungsanschlüsse auf, die mit korrespondierenden Anschlüssen der Folgeelektronik 100 verbindbar sind, sowie zwei Anschlüsse zur Verbindung mit dem Leitungspaar 25, über das das Mischsignal übertragen wird.

Der Zwei-/Vierdraht-Wandler 50 ist geeignet ausgestaltet, die Stromversorgungssignale und diejenigen Datensignale, die aus Richtung der Folgeelektronik 100 beim Zwei-/Vierdraht-Wandler 50 eintreffen, in das Mischsignal einzufügen und über das Leitungspaar 25 an das Positionsmessgerät 10 auszugeben, sowie diejenigen Datensignale, die vom Positionsmessgerät 10 beim Zwei-/Vierdraht-Wandler 50 eintreffen, aus dem Mischsignal zu entnehmen und an die Folgeelektronik 100 auszugeben.

Diese Ausführungsform ist somit geeignet, eine Folgeelektronik 100, die eine Vierdraht-Schnittstelle (zwei Stromversorgungsanschlüsse und zwei Datenübertragungsanschlüsse) aufweist, mit einer korrespondierenden Vierdraht-Schnittstelle eines Positionsmessgeräts 10 zu verbinden, wobei die Signalübertragung über die Hauptübertragungsstrecke in Form eines Mischsignals über ein einziges Leitungspaar 25 erfolgt. Die erfindungsgemäße Vorrichtung kann also ein herkömmliches Verbindungskabel, das zur Signalübertragung über die gesamte Übertragungsstrecke zwei Leitungspaare benötigen würde, ersetzen.

Auch in diesem Beispiel entspricht die Länge des Leitungspaars 25 der Hauptübertragungsstrecke.

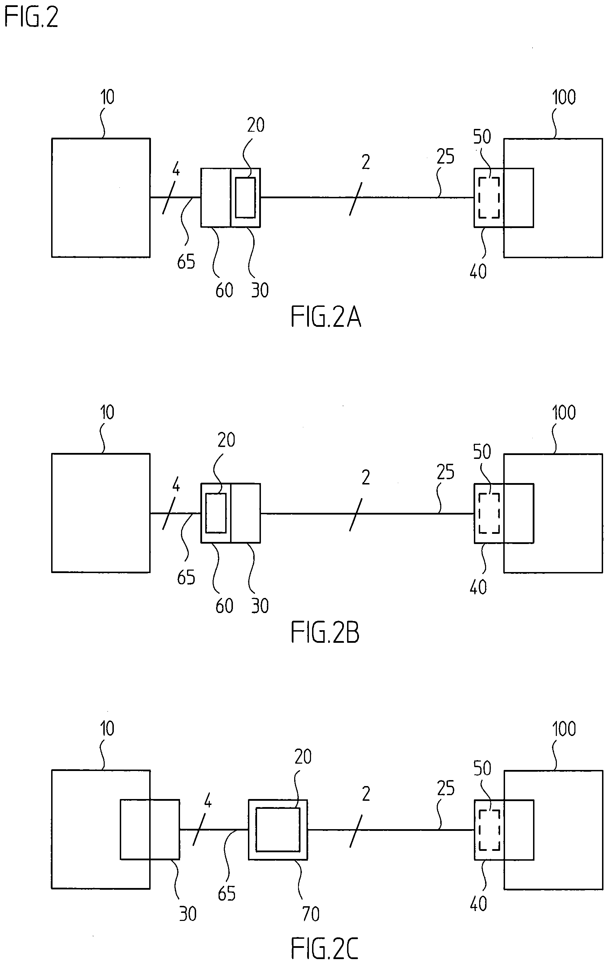

Figur 2A zeigt den prinzipiellen Aufbau einer weiteren Ausführungsform einer erfindungsgemäßen Vorrichtung. Im Vergleich zu den vorhergehenden Ausführungsformen erfolgt der Anschluss der Vorrichtung, speziell des Vier-/Zweidraht-Wandlers 20, an der Vierdraht-Schnittstelle des Positionsmessgeräts 10 hier über eine Anschlussleitung 65, die zwei Leitungspaare aufweist. Positionsmessgerät 10 und Vier-/Zweidraht-Wandler 20 können somit räumlich getrennt angeordnet werden und sind somit optimal thermisch entkoppelt. Das bedeutet, dass die Komponenten, aus denen der Vier-/Zweidraht-Wandler besteht, ggf. für eine niedrigere Betriebstemperatur ausgelegt werden können, als z.B. das Positionsmessgerät 10, bzw. dessen Komponenten. Dabei ist es besonders vorteilhaft, wenn die Anschlussleitung 65 im Vergleich zur Hauptübertragungsstrecke (der Länge des Kabels, in dem das Leitungspaar 25 angeordnet ist), möglichst kurz ist.

Zur Herstellung der Verbindung kann weiterhin der erste Steckverbinder 30 vorgesehen sein, der nun mittels eines dritten Steckverbinders 60 an die Anschlussleitung 65 anschließbar ist. Der Vier-/Zweidraht-Wandler ist im Gehäuse des ersten Steckverbinders 30 angeordnet, zur Herstellung der Verbindung sind somit in den Steckverbindern 30, 60 je zwei Kontaktpaare erforderlich.

Für den Anschluss der Anschlussleitung 65 an die Stromversorgungs- und Datenübertragungsanschlüsse des Positionsmessgeräts 10 kann am Gehäuse des Positionsmessgeräts 10 zwar weiterhin ein Steckverbinder vorgesehen sein, mit Vorteil erfolgt der Anschluss jedoch innerhalb des Gehäuses, beispielsweise über Miniatursteckverbinder, Löt- oder Klemmverbindungen, da diese sehr wenig Platz benötigen. Das Positionsmessgerät 10 kann somit sehr klein gebaut werden und benötigt wegen der fehlenden Steckverbindung am Gehäuse des Positionsmessgeräts 10 wenig Einbauraum.

Die Übertragung der Stromversorgungssignale und der Datensignale über die Hauptübertragungsstrecke erfolgt weiterhin in Form eines Mischsignals über nur ein Leitungspaar 25. Seitens der Folgeelektronik 100 kann auch in diesem Ausführungsbeispiel ein zweiter Steckverbinder 40 vorgesehen sein, in dessen Gehäuse, handelt es sich bei der Schnittstelle der Folgeelektronik 100 um eine Vierdraht-Schnittstelle, ein Zwei-/Vierdraht-Wandler 50 angeordnet ist.

Diese Ausführungsform bietet somit, neben den bereits genannten, zwei zusätzliche Vorteile: zum einen ermöglicht sie eine kompakte Bauform des Positionsmessgeräts 10, zum anderen sind Positionsmessgerät 10 und Vier-/Zweidraht-Wandler 20 jetzt optimal thermisch entkoppelt.
Figur 2B zeigt als weitere Ausführungsform eine Variante der in Figur 2A dargestellten Ausführungsform. Hier ist der Vier-/Zweidraht-Wandler 20 im Gehäuse des dritten Steckverbinders 60 angeordnet. Dadurch kann die Anzahl der Kontakte in den Steckverbindern 30, 60 auf je ein Kontaktpaar reduziert werden.

Figur 2C zeigt den prinzipiellen Aufbau einer weiteren Ausführungsform einer erfindungsgemäßen Vorrichtung, die auf den vorhergehend anhand der Figuren 2A und 2B diskutierten Varianten basiert. Der Vier-/Zweidraht-Wandler 20 ist hier in einem Modul 70 angeordnet und die zwei Leitungspaare der Anschlussleitung 65, sowie das eine Leitungspaar 25 der Hauptübertragungsstrecke sind direkt an die entsprechenden Anschlüsse des Vier-/Zweidraht-Wandlers 20 angeschlossen, beispielsweise durch Lötverbindungen. Besonders vorteilhaft ist es, wenn das Modul 70 hermetisch geschlossen und ggf. mit Vergussmasse gefüllt ist.

Der Anschluss der Vorrichtung an das Positionsmessgerät 10 erfolgt beispielsweise über den ersten Steckverbinder 30 und ein entsprechendes Gegenstück, das am Gehäuse des Positionsmessgeräts 10 angeordnet ist.

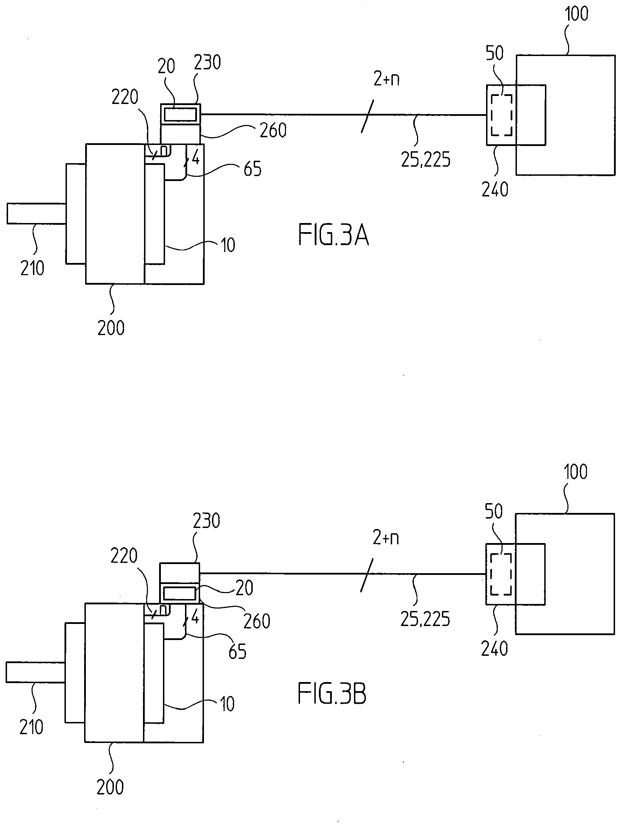

Figur 3A zeigt den prinzipiellen Aufbau einer weiteren Ausführungsform einer erfindungsgemäßen Vorrichtung. Bei dem Positionsmessgerät 10 handelt es sich in diesem Beispiel um einen Einbaudrehgeber, der geeignet ist, die Position der Welle 210 eines Elektromotors 200 zu messen.

Die erfindungsgemäße Vorrichtung entspricht weitgehend der anhand von Figur 2A beschriebenen Vorrichtung, d.h. die Übertragung von Stromversorgungssignalen und Datensignalen zwischen dem Positionsmessgerät 10 und der Folgeelektronik 100 erfolgt über eine Anschlussleitung 65, einen dritten Steckverbinder 260, einen ersten Steckverbinder 230, ein Leitungspaar 25 und einen zweiten Steckverbinder 240. Im ersten Steckverbinder 230 ist ein Vier-/Zweidraht-Wandler 20 angeordnet, im zweiten Steckverbinder ggf. ein Zwei-/Vierdraht-Wandler 50.

Abweichend von der anhand von Figur 2A beschriebenen Vorrichtung, ist das Leitungspaar 25 jetzt innerhalb eines Motorkabels 225 angeordnet. Das Motorkabel 225 weist neben dem Leitungspaar 25 eine Anzahl von n zusätzlichen Leitungen auf, die der Signalübertragung zwischen Folgeelektronik 100 und Elektromotor 200 dienen. Die zusätzlichen Leitungen können für die Leistungsansteuerung des Elektromotors 200 vorgesehen sein, sowie zur Übertragung von Bremssignalen oder Sensorsignalen (z.B. eines Temperatursensors) etc. dienen.

Der Vollständigkeit halber sei erwähnt, dass die Steckverbinder 230, 240, 260 mit Kontakten ausgestattet sind, die den Anforderungen bzgl. Leistung und Signalqualität der über die zusätzlichen Leitungen zu übertragenden Signale entsprechen.

Figur 3B zeigt den prinzipiellen Aufbau einer Variante der anhand von Figur 3A diskutierten Ausführungsform. In diesem Beispiel ist der Vier-/Zweidraht-Wandler dem dritten Steckverbinder 260 zugeordnet, d.h. innerhalb des Gehäuses des dritten Steckverbinders 260 oder innerhalb des Motorgehäuses in räumlicher Nähe des dritten Steckverbinders 260. Dadurch reduziert sich wiederum die benötigte Anzahl von Kontakten in den Steckverbindern 230, 260. Mit Vorteil kann hier zum Anschluss des Elektromotors 200 ein fertig konfektioniertes Standard-Verbindungskabel eingesetzt werden, das den ersten Steckverbinder 230, das Motorkabel 225 und den zweiten Steckverbinder 240 umfasst und die Anzahl von n Leitungen, sowie das Leitungspaar 25 aufweist.

Figur 4 zeigt ein Blockschaltbild einer erfindungsgemäßen Vorrichtung, bei der sowohl im ersten Steckverbinder 30 ein Vier-/Zweidraht-Wandler 20, als auch im zweiten Steckverbinder 40 ein Zwei-/Vierdraht-Wandler 50 angeordnet ist. Die Steckverbinder 30, 40 sind an ihre jeweiligen Gegenstücke im Positionsmessgerät 10, bzw. in der Folgeelektronik 100 anschließbar.

Zum Einfügen (Einkoppeln) bzw. Entnehmen (Auskoppeln) von Datensignalen aus dem Mischsignal, das über das Leitungspaar 25 übertragen wird, sind sowohl im Vier-/Zweidraht-Wandler 20, als auch im Zwei-/Vierdraht-Wandler 50 Hochpassfilter 24, 54 vorgesehen. Diese sind einerseits mit den Datenübertragungsanschlüssen DATA des Positionsmessgeräts 10, bzw. der Folgeelektronik 100, und andererseits jeweils mit dem Leitungspaar 25 verbunden. Die Hochpassfilter 24, 54 lassen die hochfrequenten Datensignale passieren und sperren niederfrequente Signale, bzw. Gleichspannungssignale (Stromversorgungssignale).

Zur Trennung der Stromversorgungssignale von den Datensignalen sind im Vier-/Zweidraht-Wandler 20 und im Zwei-/Vierdraht-Wandler 50 Tiefpassfilter 22, 52 vorgesehen. Diese wiederum sind einerseits mit den Stromversorgungsanschlüssen PWR des Positionsmessgeräts 10, bzw. der Folgeelektronik 100, und andererseits ebenfalls jeweils mit dem Leitungspaar 25 verbunden.

Mit Vorteil sind Vier-/Zweidraht-Wandler 20 und Zwei-/Vierdraht-Wandler 50 identisch ausgeführt.

Diese Ausführungsform ist insbesondere dann einsetzbar, wenn die Datensignale gleichanteilsfrei übertragen werden. Das ist beispielsweise der Fall, wenn für die Datenübertragung eine gleichanteilsfreie Codierung (z.B. Manchester- oder 8b10b-Codierung) zum Einsatz kommt.

Figur 5 zeigt nun eine bevorzugte Ausführungsform einer erfindungsgemäßen Vorrichtung, die auf der anhand von Figur 4 beschriebenen Ausführungsform basiert. Besonders vorteilhaft ist hier, dass im Vier-/Zweidraht-Wandler 20 und im Zwei-/Vierdraht-Wandler 50 für die Realisierung der Hochpassfilter 24, 54, sowie der Tiefpassfilter 22, 52 ausschließlich passive Bauteile zum Einsatz kommen, d.h. Bauteile, die selbst keine Stromversorgung benötigen.

Konkret umfassen die Hochpassfilter 24, bzw. 54 je zwei Kondensatoren C1, C2, bzw. C3, C4 und die Tiefpassfilter 22, bzw. 52 je zwei Spulen L1, L2, bzw. L3, L4. Diese Bauteile sind sowohl preisgünstig, als auch robust, so dass mit geringem finanziellem Aufwand eine hohe Zuverlässigkeit erreicht wird.

Beispielhaft, aber keinesfalls einschränkend, sei für eine Datenübertragungsfrequenz von 25 MHz und eine Versorgungsspannung von 12 V für die Spulen L1-L4 ein Wert von 10 µH und für die Kondensatoren C1-C4 ein Wert von 220 nF genannt.

Neben den Spulen L1-L4 und den Kondensatoren C1-C4 können im Vier-/Zweidraht-Wandler 20 oder im Zwei-/Vierdraht-Wandler 50 noch weitere Bauteile enthalten sein, beispielsweise Terminierungswiderstände, etc.

Die vorliegende Erfindung ist nicht auf die beschriebenen Ausführungsbeispiele beschränkt. Vielmehr können von einem Fachmann auch weitere Varianten geschaffen werden, ohne den Gegenstand der Erfindung zu verlassen.

## Patentansprüche

1. Vorrichtung zur Übertragung von Stromversorgungssignalen und Datensignalen zwischen einem Positionsmessgerät (10) und einer Folgeelektronik (100), wobei das Positionsmessgerät (10) zwei Stromversorgungsanschlüsse und zwei Datenübertragungsanschlüsse zur bidirektionalen, differentiellen Datenübertragung aufweist und die Übertragung der Stromversorgungssignale und der Datensignale über eine Hauptübertragungsstrecke in Form eines Mischsignals über ein einziges Leitungspaar (25) erfolgt, wobei die Vorrichtung einen Vier-/Zweidraht-Wandler (20) umfasst, der messgeräteseitig zwei Stromversorgungsanschlüsse und zwei Datenübertragungsanschlüsse aufweist, die mit den korrespondierenden Anschlüssen des Positionsmessgeräts (10) verbindbar sind, dem seitens der Folgeelektronik (100) das Mischsignal zugeführt ist und der ausgestaltet ist, die Stromversorgungssignale und diejenigen Datensignale, die von der Folgeelektronik (100) beim Vier-/Zweidraht-Wandler (20) eintreffen, aus dem Mischsignal zu entnehmen und über die Stromversorgungsanschlüsse und die Datenübertragungsanschlüsse an das Positionsmessgerät (10) auszugeben, sowie Datensignale, die vom Positionsmessgerät (10) an die Folgeelektronik (100) gesendet werden, in das Mischsignal einzufügen, **dadurch gekennzeichnet, dass** der Vier-/Zweidrahtwandler (20) ein Hochpassfilter umfasst, um die Datensignale in das Mischsignal einzukoppeln, bzw. aus dem Mischsignal auszukoppeln, sowie ein Tiefpassfilter, um die Stromversorgungssignale von den Datensignalen zu trennen und wobei der Anschluss an das Positionsmessgerät (10) über einen ersten Steckverbinder (30) erfolgt, der an ein entsprechendes Gegenstück am Positionsmessgerät (10) anschließbar ist, und wobei /Zweidraht-Wandler (20) im Gehäuse des ersten Steckverbinders (30) und außerhalb des Positionsmessgerätes (10) angeordnet ist.

2. Vorrichtung zur Übertragung von Stromversorgungssignalen und Datensignalen zwischen einem Positionsmessgerät (10) und einer Folgeelektronik (100), wobei das Positionsmessgerät (10) zwei Stromversorgungsanschlüsse und zwei Datenübertragungsanschlüsse zur bidirektionalen, differentiellen Datenübertragung aufweist und die Übertragung der Stromversorgungssignale und der Datensignale über eine Hauptübertragungsstrecke in Form eines Mischsignals über ein einziges Leitungspaar (25) erfolgt, wobei die Vorrichtung einen Vier-/Zweidraht-Wandler (20) umfasst, der messgeräteseitig zwei Stromversorgungsanschlüsse und zwei Datenübertragungsanschlüsse aufweist, die mit den korrespondierenden Anschlüssen des Positionsmessgeräts (10) verbindbar sind, dem seitens der Folgeelektronik (100) das Mischsignal zugeführt ist und der ausgestaltet ist, die Stromversorgungssignale und diejenigen Datensignale, die von der Folgeelektronik (100) beim Vier-/Zweidraht-Wandler (20) eintreffen, aus dem Mischsignal zu entnehmen und über die Stromversorgungsanschlüsse und die Datenübertragungsanschlüsse an das Positionsmessgerät (10) auszugeben, sowie Datensignale, die vom Positionsmessgerät (10) an die Folgeelektronik (100) gesendet werden, in das Mischsignal einzufügen, **dadurch gekennzeichnet, dass** der Vier-/Zweidrahtwandler (20) ein Hochpassfilter umfasst, um die Datensignale in das Mischsignal einzukoppeln, bzw. aus dem Mischsignal auszukoppeln, sowie ein Tiefpassfilter, um die Stromversorgungssignale von den Datensignalen zu trennen und wobei der Anschluss an das Positionsmessgerät (10) über einen ersten Steckverbinder (30) und einen dritten Steckverbinder (60), der ein Gegenstück zum ersten Steckverbinder (20) ist, sowie über eine Anschlussleitung (65) erfolgt, die zwei Leitungspaare umfasst und eine räumliche Trennung von Positionsmessgerät (10) und Vier-/Zweidraht-Wandler (20) gewährleistet und wobei der erste Steckverbinder (30) und der dritte Steckverbinder (60) ein Kontaktpaar zur Übertragung des Mischsignals aufweisen und der Vier-/Zweidraht-Wandler (20) im Gehäuse des dritten Steckverbinders (60) angeordnet ist **oder** der erste Steckverbinder (30) und der dritte Steckverbinder (60) zwei Kontaktpaare zur Übertragung der Stromversorgungssignale und der Datensignale aufweisen und der Vier-/Zweidraht-Wandler (20) im Gehäuse des ersten Steckverbinders (30) angeordnet ist.

3. Vorrichtung nach einem der vorhergehenden Ansprüche, wobei das Leitungspaar (25) der Hauptübertragungsstrecke zur Übertragung des Mischsignals an entsprechenden Anschlüssen an die Folgeelektronik (100) anschließbar ist.

4. Vorrichtung nach Anspruch 3, wobei der Anschluss über einen zweiten Steckverbinder (40) erfolgt, der an ein entsprechendes Gegenstück an der Folgeelektronik (100) anschließbar ist, und der zweite Steckverbinder (40) ein Kontaktpaar zur Übertragung des Mischsignals aufweist.

5. Vorrichtung nach einem der vorhergehenden Ansprüche, wobei die Folgeelektronik (100) zwei Stromversorgungsanschlüsse und zwei Datenübertragungsanschlüsse zur bidirektionalen, differentiellen Datenübertragung aufweist und auf der Seite der Folgeelektronik (100) ein Zwei-/Vierdraht-Wandler (50) angeordnet ist, der zwei Stromversorgungsanschlüsse und zwei Datenübertragungsanschlüsse aufweist, die mit den korrespondierenden Anschlüssen der Folgeelektronik (100) verbindbar sind, dem seitens des Positionsmessgeräts (10) das Mischsignal zugeführt ist und der ausgestaltet ist, die Stromversorgungssignale und diejenigen Datensignale, die von der Folgeelektronik (100) beim Zwei-/Vierdraht-Wandler (50) eintreffen, in das Mischsignal einzufügen und an das Positionsmessgerät (10) auszugeben, sowie diejenigen Datensignale, die vom Positionsmessgerät (10) beim Zwei-/Vierdraht-Wandler (50) eintreffen, aus dem Mischsignal zu entnehmen und an die Folgeelektronik (100) auszugeben.

6. Vorrichtung nach Anspruch 5, wobei der Anschluss an die Folgeelektronik (100) über einen zweiten Steckverbinder (60) erfolgt, der zwei Kontaktpaare zur Übertragung der Stromversorgungssignale und der Datensignale aufweist und der an ein entsprechendes Gegenstück der Folgeelektronik (100) anschließbar ist, und wobei der Zwei-/Vierdraht-Wandler (50) im Gehäuse des zweiten Steckverbinders (60) angeordnet ist.

7. Vorrichtung nach einem der vorhergehenden Ansprüche, wobei das Leitungspaar (25) in einem Motorkabel (225) angeordnet ist.

## Claims

1. Apparatus for transmitting power supply signals and data signals between a position measuring device (10) and downstream electronics (100), wherein the position measuring device (10) has two power supply connections and two data transmission connections for bidirectional, differential data transmission, and the power supply signals and the data signals are transmitted via a main transmission path in the form of a mixed signal using a single line pair (25), wherein the apparatus comprises a four-wire/two-wire converter (20) which has, on the measuring device side, two power supply connections and two data transmission connections which can be connected to the corresponding connections of the position measuring device (10), to which the mixed signal is supplied by the downstream electronics (100), and is configured to remove the power supply signals and those data signals which arrive at the four-wire/two-wire converter (20) from the downstream electronics (100) from the mixed signal and to output them to the position measuring device (10) via the power supply connections and the data transmission connections and to insert data signals which are transmitted from the position measuring device (10) to the downstream electronics (100) into the mixed signal, **characterized in that** the four-wire/two-wire converter (20) comprises a high-pass filter in order to couple the data signals into the mixed signal and out of the mixed signal and a low-pass filter in order to separate the power supply signals from the data signals, and wherein the connection to the position measuring device (10) is effected via a first plug connector (30) which can be connected to a corresponding counterpart on the position measuring device (10), and wherein the four-wire/two-wire converter (20) is arranged in the housing of the first plug connector (30) and outside the position measuring device (10).

2. Apparatus for transmitting power supply signals and data signals between a position measuring device (10) and downstream electronics (100), wherein the position measuring device (10) has two power supply connections and two data transmission connections for bidirectional, differential data transmission, and the power supply signals and the data signals are transmitted via a main transmission path in the form of a mixed signal using a single line pair (25), wherein the apparatus comprises a four-wire/two-wire converter (20) which has, on the measuring device side, two power supply connections and two data transmission connections which can be connected to the corresponding connections of the position measuring device (10), to which the mixed signal is supplied by the downstream electronics (100), and is configured to remove the power supply signals and those data signals which arrive at the four-wire/two-wire converter (20) from the downstream electronics (100) from the mixed signal and to output them to the position measuring device (10) via the power supply connections and the data transmission connections and to insert data signals which are transmitted from the position measuring device (10) to the downstream electronics (100) into the mixed signal, **characterized in that** the four-wire/two-wire converter (20) comprises a high-pass filter in order to couple the data signals into the mixed signal and out of the mixed signal and a low-pass filter in order to separate the power supply signals from the data signals, and wherein the connection to the position measuring device (10) is effected via a first plug connector (30) and a third plug connector (60), which is a counterpart to the first plug connector (20), and via a connection line (65) which comprises two line pairs and ensures spatial separation of the position measuring device (10) and the four-wire/two-wire converter (20), and wherein the first plug connector (30) and the third plug connector (60) have a contact pair for transmitting the mixed signal, and the four-wire/two-wire converter (20) is arranged in the housing of the third plug connector (60), or the first plug connector (30) and the third plug connector (60) have two contact pairs for transmitting the power supply signals and the data signals, and the four-wire/two-wire converter (20) is arranged in the housing of the first plug connector (30).

3. Apparatus according to one of the preceding claims, wherein the line pair (25) of the main transmission path for transmitting the mixed signal to corresponding connections can be connected to the downstream electronics (100).

4. Apparatus according to Claim 3, wherein the connection is effected via a second plug connector (40) which can be connected to a corresponding counterpart on the downstream electronics (100), and the second plug connector (40) has a contact pair for transmitting the mixed signal.

5. Apparatus according to one of the preceding claims, wherein the downstream electronics (100) have two power supply connections and two data transmission connections for bidirectional, differential data transmission, and a two-wire/four-wire converter (50) is arranged on the side of the downstream electronics (100) and has two power supply connections and two data transmission connections which can be connected to the corresponding connections of the downstream electronics (100), to which the mixed signal is supplied by the position measuring device (10), and is configured to insert the power supply signals and those data signals which arrive at the two-wire/four-wire converter (50) from the downstream electronics (100) into the mixed signal and to output them to the position measuring device (10) and to remove those data signals which arrive at the two-wire/four-wire converter (50) from the position measuring device (10) from the mixed signal and to output them to the downstream electronics (100) .

6. Apparatus according to Claim 5, wherein the connection to the downstream electronics (100) is effected via a second plug connector (60) which has two contact pairs for transmitting the power supply signals and the data signals and can be connected to a corresponding counterpart of the downstream electronics (100), and wherein the two-wire/four-wire converter (50) is arranged in the housing of the second plug connector (60) .

7. Apparatus according to one of the preceding claims, wherein the line pair (25) is arranged in a motor cable (225) .

## Revendications

1. Dispositif pour la transmission de signaux d'alimentation en courant et de signaux de données entre un appareil de mesure de position (10) et une électronique consécutive (100), l'appareil de mesure de position (10) présentant deux connexions d'alimentation en courant et deux connexions de transmission de données pour la transmission de données différentielle bidirectionnelle, et la transmission des signaux d'alimentation en courant et des signaux de données étant effectuée sur un trajet de transmission principal sous la forme d'un signal mixte par l'intermédiaire d'une seule paire de conducteurs (25), le dispositif comprenant un convertisseur quatre fils/ deux fils (20), qui présente côté appareil de mesure deux connexions d'alimentation en courant et deux connexions de transmission de données qui peuvent être reliées aux connexions correspondantes de l'appareil de mesure de position (10), auquel le signal mixte est amené par l'électronique consécutive (100), et qui est configuré pour extraire du signal mixte les signaux d'alimentation en courant et ceux des signaux de données qui arrivent de l'électronique consécutive (100) au convertisseur quatre fils/ deux fils (20), et pour les sortir à l'appareil de mesure de position (10) par l'intermédiaire des connexions d'alimentation en courant et des connexions de transmission de données, ainsi que pour insérer dans le signal mixte des signaux de données qui sont envoyés de l'appareil de mesure de position (10) à l'électronique consécutive (100),
**caractérisé en ce que** le convertisseur quatre fils/ deux fils (20) comprend un filtre passe-haut pour coupler les signaux de données dans le signal mixte ou pour les découpler du signal mixte, ainsi qu'un filtre passe-bas pour séparer les signaux d'alimentation en courant des signaux de données, et dans lequel la connexion à l'appareil de mesure de position (10) est effectuée par un premier connecteur enfichable (30) qui peut être connecté à un pendant correspondant sur l'appareil de mesure de position (10), et le convertisseur quatre fils/ deux fils (20) étant disposé dans le boîtier du premier connecteur enfichable (30) et à l'extérieur de l'appareil de mesure de position (10).

2. Dispositif pour la transmission de signaux d'alimentation en courant et de signaux de données entre un appareil de mesure de position (10) et une électronique consécutive (100), l'appareil de mesure de position (10) présentant deux connexions d'alimentation en courant et deux connexions de transmission de données pour la transmission de données différentielle bidirectionnelle, et la transmission des signaux d'alimentation en courant et des signaux de données étant effectuée sur un trajet de transmission principal sous la forme d'un signal mixte par l'intermédiaire d'une seule paire de conducteurs (25), le dispositif comprenant un convertisseur quatre fils/ deux fils (20) qui présente côté appareil de mesure deux connexions d'alimentation en courant et deux connexions de transmission de données qui peuvent être reliées aux connexions correspondantes de l'appareil de mesure de position (10) auquel le signal mixte est amené du côté de l'électronique consécutive (100), et qui est configuré pour extraire du signal mixte les signaux d'alimentation en courant et ceux des signaux de données qui arrivent de l'électronique consécutive (100) au convertisseur quatre fils/ deux fils (20), et pour les sortir à l'appareil de mesure de position (10) par l'intermédiaire des connexions d'alimentation en courant et des connexions de transmission de données, ainsi que pour insérer dans le signal mixte des signaux de données qui sont envoyés de l'appareil de mesure de position (10) à l'électronique consécutive (100),
**caractérisé en ce que** le convertisseur quatre fils/ deux fils (20) comprend un filtre passe-haut pour coupler les signaux de données dans le signal mixte ou pour les découpler du signal mixte, ainsi qu'un filtre passe-bas pour séparer les signaux d'alimentation en courant des signaux de données, et dans lequel la connexion à l'appareil de mesure de position (10) est effectuée par un premier connecteur enfichable (30) et un troisième connecteur enfichable (60), qui est un pendant du premier connecteur enfichable (20), ainsi que par une ligne de connexion (65) qui comprend deux paires de conducteurs et assure une séparation physique de l'appareil de mesure de position (10) et du convertisseur quatre fils/ deux fils (20), et dans lequel le premier connecteur enfichable (30) et le troisième connecteur enfichable (60) présentent une paire de contacts pour transmettre le signal mixte, et le convertisseur quatre fils/ deux fils (20) est disposé dans le boîtier du troisième connecteur enfichable (60), ou le premier connecteur enfichable (30) et le troisième connecteur enfichable (60) présentent deux paires de contacts pour transmettre les signaux d'alimentation en courant et les signaux de données, et le convertisseur quatre fils/ deux fils (20) est disposé dans le boîtier du premier connecteur enfichable (30).

3. Dispositif selon l'une quelconque des revendications précédentes, dans lequel la paire de conducteurs (25) du trajet de transmission principal peut être connectée à l'électronique consécutive (100), au niveau de connexions correspondantes, pour la transmission du signal mixte.

4. Dispositif selon la revendication 3, dans lequel la connexion est effectuée par un deuxième connecteur enfichable (40) qui peut être connecté à un pendant correspondant sur l'électronique consécutive (100), et le deuxième connecteur enfichable (40) présente une paire de contacts pour la transmission du signal mixte.

5. Dispositif selon l'une quelconque des revendications précédentes, dans lequel l'électronique consécutive (100) présente deux connexions d'alimentation en courant et deux connexions de transmission de données pour la transmission de données différentielle bidirectionnelle, et du côté de l'électronique consécutive (100) est disposé un convertisseur deux fils/ quatre fils (50) qui présente deux connexions d'alimentation en courant et deux connexions de transmission de données, qui peuvent être reliées aux connexions correspondantes de l'électronique consécutive (100), auquel le signal mixte est amené du côté de l'appareil de mesure de position (10), et qui est configuré pour insérer dans le signal mixte les signaux d'alimentation en courant et ceux des signaux de données qui arrivent de l'électronique consécutive (100) au convertisseur deux fils/ quatre fils (50), et les sortir à l'appareil de mesure de position (10), ainsi que pour extraire du signal mixte ceux des signaux de données qui arrivent de l'appareil de mesure de position (10) au convertisseur deux fils/ quatre fils (50), et les sortir à l'électronique consécutive (100).

6. Dispositif selon la revendication 5, dans lequel la connexion à l'électronique consécutive (100) est effectuée par un deuxième connecteur enfichable (60) qui présente deux paires de contact pour la transmission des signaux d'alimentation en courant et des signaux de données et qui peut être connecté à un pendant correspondant de l'électronique consécutive (100), et le convertisseur deux fils/ quatre fils (50) est disposé dans le boîtier du deuxième connecteur enfichable (60).

7. Dispositif selon l'une quelconque des revendications précédentes, dans lequel la paire de conducteurs (25) est disposée dans un câble moteur (225) .
